# EUROPÄISCHE PATENTSCHRIFT

(11) **EP 2 160 267 B1**
(45) Veröffentlichungstag und Bekanntmachung des Hinweises auf die Patenterteilung: **21.09.2011**
(21) Anmeldenummer: 08749125.4
(22) Anmeldetag: 25.04.2008
(51) Int. Cl.: B23P 15/10, C21D 1/09, C21D 1/10, C21D 9/00

(54) **SCHMELZBEHANDELTER MULDENRAND EINER KOLBEN-BRENNRAUMMULDE**
MELT-TREATED RIM OF A PISTON COMBUSTION BOWL
BORDURE MOULÉE TRAITÉE PAR FUSION POUR MOULURES DE CHAMBRE DE COMBUSTION À PISTON

(30) Priorität: 29.06.2007 DE 102007030301; 19.09.2007 DE 102007044696
(43) Veröffentlichungstag der Anmeldung: 10.03.2010
(73) Patentinhaber: KS Kolbenschmidt GmbH, 74172 Neckarsulm (DE)
(72) Erfinder: LUFT, Jochen, 01733 Kesselsdorf (DE); STEFFENS, Thomas, 74906 Bad Rappenau (DE); SARTORIUS, Bernd, 74336 Brackenheim (DE); SCHALLER, Christian, 74842 Billigheim (DE)
(74) Vertreter: Greif, Thomas
(86) Internationale Anmeldenummer: PCT/EP2008/003343
(87) Internationale Veröffentlichungsnummer: WO 2009/003551

(56) Entgegenhaltungen:
- EP-A- 1 386 687
- CH-A5- 659 300
- DE-A1- 1 783 058
- DE-A1- 10 335 843
- DE-A1-102005 034 905
- DE-B3-102004 033 486
- DE-U1- 8 028 685
- GB-A- 2 164 358
- US-B1- 6 600 130

## Beschreibung

Die Erfindung betrifft ein Verfahren zur Herstellung von in Brennkraftmaschinen einsetzbaren Kolben aus Leichtmetall, die eine einem Kolbenboden zugeordnete Brennraummulde aufweisen und die zumindest bereichsweise einer Schmelzbehandlung unterzogen ist, (sieche z.B. DE 10 2004 033 486 B3).

Bei Kolben ist die Brennraummulde im Betriebszustand thermisch besonders hoch und wechselnd beansprucht, wodurch die Gefahr einer Rissbildung besteht. Zur Vermeidung einer Rissbildung ist es bekannt, Einsatzkörper aus einem hitzebeständigen Stahl oder aus metallkeramischen Werkstoffen in den Kolbenboden einzubringen. Nachteilig erhöhen derartige Einsatzkörper das Gewicht des Leichtmetallkolbens und besitzen eine schlechte Wärmeleitfähigkeit, wodurch sich das umgebende Leichtmetall im Betrieb auf eine Temperatur aufheizt, die zu einer nachlassenden Festigkeit führt. Durch die unterschiedlichen Wärmedehnungen des Einsatzkörpers und des Leichtmetalls stellen sich außerdem nachteilige Spannungen ein.

Weiterhin ist bekannt, Werkstoffe durch Umschmelzen zu veredeln. Dieses Verfahren beruht darauf, dass ein in den Werkstoff eindringender Ladungsträgerstrahl eine kleine, unmittelbar in seinem Bereich liegende Werkstoffmenge aufschmilzt, während die Umgebung der Schmelzzone kalt bleibt und das aufgeschmolzene Material daher unmittelbar nach dem Entfernen bzw. Fortschreiten des Ladungsträgers stark abkühlt und sofort wieder erstarrt.

Das Umschmelzen verbessert die Oberflächenfestigkeit und die Oberflächenzähigkeit. Die Änderung der Werkstoffeigenschaften beruht dabei auf Gefügeumbildungen, die durch Aufschmelzungs- und Abschreckungsvorgänge hervorgerufen werden.

Aus der DE 21 245 595 ist eine Umschmelzveredlung eines Kolbens bekannt, bei dem ein Ladungsträgerstrahl in den Werkstoff eindringt. Nachteilig wird mit diesem Verfahren nur eine kleine, unmittelbar im Bereich des Ladungsträgerstrahls befindliche Werkstoffzone aufgeschmolzen. Gemäß der DE 10 2005 034 905 A1 wird zur Herstellung eines Kolbens mit einer Brennraummulde der Muldengrund mit dem Ziel schmelzbehandelt, dass der Werkstoff im schmelzbehandelten, umgeschmolzenen Bereich in einer festlegbaren Tiefe verändert wird. Aus der DE 80 28 685 U1 ist bekannt, im Bereich der Brennraummulde des Kolbens eine Umschmelzbehandlung durchzuführen, um in dem Kolbenwerkstoff lokal bestimmte Spannungsverhältnisse zu erzeugen, die sich im Betriebszustand des Kolbens vorteilhaft auswirken. Die JP 59 108 849 offenbart einen Elektronenstrahl-, Laser-, Plasma-, oder einen WIG-Prozess, bei dem mit hoher Energiedichte ein partielles Umschmelzen eines Bereichs der Brennraummulde erreicht wird. Ein Umschmelzen einzelner Bereiche des Kolbens mittels einer induktiven Erwärmung zeigt die DE 10 335 843 A. Dieses Verfahren besitzt nachteilig eine begrenzte, die Wirksamkeit der Werkstoff-Umschmelzung unmittelbar bestimmende Tiefenwirkung. Das Dokument EP 03 003 199 A offenbart weiterhin ein Verfahren zur Herstellung eines Kolbens, bei dem zur Schmelzbehandlung ein Lichtbogen-Schweißverfahren vorgesehen ist.

Der Erfindung liegt die Aufgabe zugrunde, einen Kolben zu realisieren, der im Bereich einer hoch belasteten Zone der Brennraummulde lokal ein verbessertes, die Lebensdauer erhöhendes Werkstoffgefüge aufweist.

Diese Aufgabe ist durch die Merkmale des Patentanspruchs 1 gelöst.

Die Erfindung gemäß Patentanspruch 1 sieht eine zwei Schritte einschließende Verfahrenskombination vor. Der für die Umschmelzung vorgesehene Muldenrand der Brennraummulde wird in einem ersten Verfahrensschritt induktiv erwärmt. Danach wird der Werkstoff des auch als Begrenzungszone zu bezeichnenden Muldenrandes in einem zweiten Verfahrensschritt mittels Laserstrahl umgeschmolzen und damit veredelt. Diese Verfahrensschritte werden in einem kurzen zeitlichen Abstand, möglichst unmittelbar folgend durchgeführt. Alternativ schließt die Erfindung auch eine Werkstoffumschmelzung ein, bei der als erster Verfahrensschritt das Laserumschmelzen vorgesehen ist, an das sich die induktive Erwärmung anschließt.

Mit dem Laserumschmelzprozess wird die erforderliche Tiefenwirkung erzielt. Eine ausschließlich mittels eines Laserstrahls vorgenommene Umschmelzung ist durch eine starke Porenbildung charakterisiert, hervorgerufen durch eine Überhitzung der Schmelze und der damit verbundenen erhöhten Gasaufnahme. Dagegen kann mit einer reinen induktiven. Erwärmung die angestrebte Tiefenwirkung der Umschmelzung nicht erzielt werden. Durch die erfindungsgemäße Verfahrenskombination wird die gewünschte wirkungsvolle Umschmelztiefe erreicht, wobei gleichzeitig eine Überhitzung der Schmelze vermieden wird.

Durch das Umschmelzen einer begrenzten Zone der Brennraummulde im Bereich des Muldenrandes und das prozesscharakteristische schnelle Erstarren wird vorteilhaft ein oxidärmeres und feinkörnigeres Werkstoffgefüge in dem Muldenrand erzielt, das die Festigkeit steigert und die Gefahr einer Rissbildung wirksam verringert. Durch die Verfahrenskombination ist außerdem gewährleistet, dass eventuell im Muldenrand befindliche Oxide zerkleinert werden.

In der schmelzbehandelten Schicht weist der Werkstoff gegenüber dem darunterliegenden Kolbenwerkstoff eine veränderte, eine kleinere Partikelgröße einschließende Struktur auf, wodurch sich die Materialeigenschaften, insbesondere die Gefügefestigkeit und damit die Steifigkeit verbessern. Mittels der erfindungsgemäßen Verfahrenskombination ergibt sich ein vorteilhafter Einfluss auf die Kristallisationsvorgänge des Gussgefüges, insbesondere der thermisch hochbelasteten Kolbenbereiche, verbunden mit einer verbesserten Gestaltfestigkeit. Durch das erfindungsgemäße Umschmelzen wird einem Versagen des Kolbens im Muldenrand, beispielsweise auf Grund von Veränderungen der Temperaturverteilung entgegengewirkt. Der lokal begrenzte schmelzbehandelte Bereich des Muldenrandes außerhalb übriger Funktionsflächen ist ausreichend, um einen wirksamen Effekt zu erzielen. Diese durch die Erfindung kostengünstig realisierbare Maßnahme steigert die Lebensdauer und damit die Wirtschaftlichkeit des erfindungsgemäßen, aus Leichtmetall hergestellten Kolbens.

Alternativ zu einem umlaufend schmelzbehandelten Muldenrand schließt die Erfindung partiell schmelzbehandelte Bereiche des Muldenrandes ein, um damit spezifische, insbesondere unterschiedliche thermische Belastungen des Kolbenbodens und der Brennraummulde zu berücksichtigen.

Der durch das erfindungsgemäße Verfahren behandelte Kolben besteht bevorzugt aus Aluminium oder einer Aluminiumlegierung. Diese Nicht-Eisen-Werkstoffe bieten den Vorteil, dass sie nicht magnetisch sind, wodurch insbesondere bei der induktiven Erwärmung eine Fließneigung des Metalls vermindert wird. Damit kann sichergestellt werden, dass sich die erfindungsgemäßen Verfahrensschritte auf die erwünschte Schichtdicke beschränken.

Bevorzugt werden im Rahmen der Erfindung die Verfahrensschritte, die induktive Erwärmung und die Laserstrahlbehandlung nach einer endgültigen Formbearbeitung des Kolbens, zumindest der Brennraummulde durchgeführt. Dies bietet einen Kostenvorteil gegenüber bisherigen Verfahren zur Umschmelzbehandlung, bei denen die schmelzbehandelten Bereiche hinsichtlich ihrer Form eine Nacharbeit erforderten.

Die wärmebehandelte Werkstoffzone ist gemäß der Erfindung bis in eine Tiefe von ≥ 150 µm bis ≤ 2 mm umgeschmolzen. Aufgrund der erfindungsgemäßen Verfahrensschritte ist es jedoch auch ohne großen zusätzlichen Aufwand möglich, eine tiefere Umschmelzbehandlung zu realisieren. Dies kann dann von Vorteil sein, wenn beispielsweise nach dem Umschmelzen gezielte Bereiche der Oberfläche spanabhebend nachbearbeitet werden, ohne dass die umgeschmolzene Werkstoffschicht vollständig verloren geht. Durch die eingesetzte Leistung des Laserstrahls sowie der induktiven Erwärmung und/oder der Einwirkzeit ist eine Tiefe der schmelzbehandelten Schicht beeinflussbar.

Nach der abgeschlossenen Umschmelzbehandlung ist erfindungsgemäß eine Abkühlrate zwischen 150 - 1050 K/sec vorgesehen. Die rasche Erstarrung der aufgeschmolzenen Oberflächenschicht bewirkt eine Gefügeumbildung, bei der sich eine gewünschte Kornverfeinung einstellt, bei der die Partikel in der Schmelze feinkörniger kristallisieren. Für den schmelzbehandelten Muldenrand ist bevorzugt eine Abkühlrate von 250 - 600 K/sec vorgesehen.

Eine weitere erfindungsgemäße Maßnahme sieht vor, dass zur Durchführung einer Schmelzbehandlung des Muldenrandes der Kolben um seine Längsachse gedreht wird. Dazu bietet es sich an, den in einer Vorrichtung aufgenommenen Kolben während der Wärme- bzw. der Umschmelzbehandlung kontinuierlich zu drehen.

Im folgenden wird die Erfindung anhand von einem Ausführungsbeispiel unter Bezugnahme auf eine Figur näher erläutert.

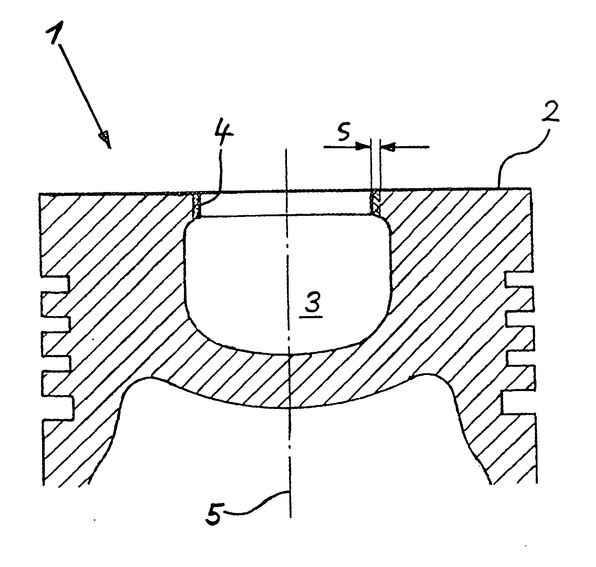

Die einzige Figur zeigt einen erfindungsgemäßen Kolben 1 im Längsschnitt, wobei sich die Darstellung im Wesentlichen auf das Kolbenoberteil beschränkt. Einem Kolbenboden 2 des Kolbens 1 ist eine sich weit in den Kolben 1 erstreckende, weitestgehend zylindrisch ausgebildete Brennraummulde 3 zugeordnet, die sich kolbenbodenseitig mittels eines Muldenrandes 4 verjüngt. Als Maßnahme zur Erzielung einer verbesserten, gesteigerten Oberflächenfestigkeit und Oberflächenzähigkeit ist der insbesondere thermisch hoch belastete Muldenrand 4 mit einem zwei Schritte umfassenden Verfahren begrenzt schmelzbehandelt. Zur Durchführung der Verfahrensschritte wird der in einer in der Figur nicht abgebildeten Vorrichtung aufgenommene Kolben 1 um seine Längsachse 5 gedreht. Dabei umfasst die Vorrichtung weiterhin Maßnahmen um einen lokalen Bereich, einen Muldenrand (4) der Brennraummulde (3) gezielt elektrisch induktiv und mit einem Laserstrahl zu erwärmen. Die thermisch behandelte bzw. veredelte Tiefe "S" der Umschmelzungszone des Muldenrandes 4 erstreckt sich dabei auf ein Maß zwischen ≥ 150 µm bis ≤ 2 mm.

### Bezugszeichenliste

- 1: Kolben
- 2: Kolbenboden
- 3: Brennraummulde
- 4: Muldenrand
- 5: Längsachse

## Patentansprüche

1. Verfahren zur Herstellung von in Brennkraftmaschinen einsetzbaren Kolben (1) aus Leichtmetall, mit einer einem Kolbenboden (2) zugeordneten Brennraummulde (3), die zumindest bereichsweise einer Schmelzbehandlung unterzogen ist, **dadurch gekennzeichnet, dass** ein erster Verfahrensschritt eine induktive Erwärmung eines Muldenrandes (4) der Brennraummulde (3) vorsieht und in einem zweiten Verfahrensschritt ein Umschmelzen des Werkstoffs im Bereich des auch als Begrenzungszone zu bezeichnenden Muldenrandes (4) mittels eines Laserstrahls erfolgt.

2. Verfahren nach Anspruch 1, **dadurch gekennzeichnet, dass** alternativ zu einem umlaufend schmelzbehandelten Muldenrand (4) einzelne Sektoren behandelt sind.

3. Verfahren nach Anspruch 1 oder 2, **dadurch gekennzeichnet, dass** als Werkstoff für den Kolben (1) Aluminium oder eine Aluminiumlegierung vorgesehen ist.

4. Verfahren nach einem der vorhergehenden Ansprüche, **dadurch gekennzeichnet, dass** nach einer abgeschlossenen Formbearbeitung des Muldenrandes (4) die Schmelzbehandlung erfolgt.

5. Verfahren nach einem der vorhergehenden Ansprüche, **dadurch gekennzeichnet, dass** eine Umschmelzung des Muldenrandes (4) bis in eine Tiefe "S" von ≥ 150 µm bis ≤ 2 mm erfolgt.

6. Verfahren nach einem der vorhergehenden Ansprüche, **dadurch gekennzeichnet, dass** eine Abkühlung des Werkstoffs nach der abgeschlossenen Schmelzbehandlung des Muldenrandes (4) in einer Rate von 150 - 1050 K/Sec vorgesehen ist.

7. Verfahren nach einem der vorhergehenden Ansprüche, **dadurch gekennzeichnet, dass** der Kolben (1) während der Schmelzbehandlung um seine Längsachse (5) gedreht wird.

## Claims

1. Method for producing pistons (1), which can be used in internal combustion engines, from light metal, having a combustion chamber depression (3) which is assigned to a piston crown (2) and which is subjected, at least in regions, to a melt treatment, **characterized in that** a first method step provides inductive heating of a depression edge (4) of the combustion chamber depression (3), and in a second method step, remelting of the material in the region of the depression edge (4), also referred to as a boundary zone, is carried out by means of a laser beam.

2. Method according to Claim 1, **characterized in that**, as an alternative to a depression edge (4) which is melt-treated all the way around, individual sectors are treated.

3. Method according to Claim 1 or 2, **characterized in that** aluminium or an aluminium alloy is provided as material for the piston (1).

4. Method according to one of the preceding claims, **characterized in that** the melt treatment takes place after shaping machining of the depression edge (4) is complete.

5. Method according to one of the preceding claims, **characterized in that** remelting of the depression edge (4) takes place to a depth "S" of ≥ 150 µm to ≤ 2 mm.

6. Method according to one of the preceding claims, **characterized in that** cooling of the material at a rate of 150 - 1050 K/sec is provided after the melt treatment of the depression edge (4) is complete.

7. Method according to one of the preceding claims, **characterized in that** the piston (1) is rotated about its longitudinal axis (5) during the melt treatment.

## Revendications

1. Procédé pour la fabrication de pistons (1) en métal léger, à introduire dans des moteurs à combustion interne, avec une cavité de chambre à combustion (3) attribuée à un fond de piston (2) et soumise au moins par endroits à un traitement par fusion, **caractérisé en ce qu'**une première étape de procédé prévoit un réchauffement inductif d'un bord de cavité (4) de la cavité de chambre à combustion (3), et **en ce qu'**une deuxième étape de procédé prévoit une fusion du matériau dans la région du bord de cavité (4) définissant également une zone de délimitation, au moyen d'un rayon laser.

2. Procédé selon la revendication 1, **caractérisé en ce qu'**alternativement à un bord de cavité (4) traité par fusion sur sa périphérie, seuls des secteurs individuels sont traités.

3. Procédé selon la revendication 1 ou 2, **caractérisé en ce qu'**en tant que matériau pour le piston (1), il est prévu de l'aluminium ou un alliage d'aluminium.

4. Procédé selon l'une des revendications précédentes, **caractérisé en ce que** le traitement par fusion est effectué une fois que le formage du bord de cavité (4) est terminé.

5. Procédé selon l'une des revendications précédentes, **caractérisé en ce qu'**une fusion du bord de cavité (4) est réalisée jusqu'à une profondeur « S » de ≥ 150 µm à ≤ 2 mm.

6. Procédé selon l'une des revendications précédentes, **caractérisé en ce qu'**il est prévu un refroidissement du matériau, une fois que le traitement par fusion du bord de cavité (4) est terminé, à une vitesse de 150 à 1050 K/sec.

7. Procédé selon l'une des revendications précédentes, **caractérisé en ce que** le piston (1) est mis en rotation autour de son axe longitudinal (5) pendant le traitement par fusion.
